# EUROPEAN PATENT SPECIFICATION

(11) **EP 2 169 956 B1**
(45) Date of publication and mention of the grant of the patent: **07.05.2014**
(21) Application number: 08765804.3
(22) Date of filing: 24.06.2008
(51) Int. Cl.: H04N 5/765, H04H 60/68

(54) **RECEIVING DEVICE AND RECEIVING METHOD**
EMPFANGSVORRICHTUNG UND -VERFAHREN
DISPOSITIF DE RÉCEPTION ET PROCÉDÉ DE RÉCEPTION

(30) Priority: 19.07.2007 JP 2007187734
(43) Date of publication of application: 31.03.2010
(73) Proprietor: Hitachi Consumer Electronics Co. Ltd., Tokyo 100-0004 (JP)
(72) Inventor: MIO, Satoshi, Yokohama-shi Kanagawa 244-0817 (JP)
(74) Representative: Hackney, Nigel John
(86) International application number: PCT/JP2008/061460
(87) International publication number: WO 2009/011206

(56) References cited:
- JP-A- 07 012 963
- JP-A- 2002 015 512
- JP-A- 2002 196 988
- JP-A- 2002 199 302
- US-A1- 2003 105 890
- US-A1- 2003 229 642
- US-A1- 2005 122 841
- US-A1- 2005 210 187
- US-A1- 2006 282 696

## Description

### TECHNICAL FIELD

The technical field relates to a receiving device which downloads and stores content data.

### BACKGROUND ART

US 2003/105890 provides detection as to the reproduction expiration time of contents is executed, using the measured time of a system clock managed based on system time data from a base station BS. If the reproduction expiration time of the contents is not exceeded, the contents can be reproduced, whereas if it is exceeded, the contents are not reproduced, and a message "Expired" is generated and displayed on a display.

US 2003/229642 discloses an invention which relates to a method for managing playlists of a rewritable recording medium in order to prevent unlimited playback or illegal edition of television broadcast programs or movies wherein copyright protection is required. The present invention operates by adding information needed for automatic timed deletion of consecutively recorded clips of A/V streams and deletion time information into the playlists of a recording medium such as a high density rewritable optical disc (BD-RW), whereby referring to the recorded information, the corresponding clips of A/V streams are automatically deleted.

US 2005/122841 discloses an electronic musical apparatus which is of a data processing type which boots up when a power is supplied and shuts down when the power is removed. The apparatus comprises an internal clock which is not backed up by an uninterruptible power supply and stops counting time when the power supply to the apparatus is shut down. Upon boot of the apparatus or as preparation for execution of processing which needs a reference time-of-day clock counting, the apparatus acquires time-of-day clock counting information, and corrects the internal clock to run with the time-of-day counting based on the time-of-day information acquired externally, so that the apparatus can execute processing which needs a reference time-of-day clock counting, even though it is not equipped with a backup power supply for the internal clock. In case the acquisition of time-of-day information has not been successful, the execution of such processing will be prohibited, or the internal clock may be corrected based on a default time-of-day or on a user-set time-of-day.

In recent years, satellite or terrestrial digital broadcasting has generally come into widespread use. In addition, transmission of digital content data including video data, audio data, etc. via a home communication network with a broad band has been in use.

Patent Document 1 discloses an object "to provide a television broadcast receiving device in which time control information for carrying out scheduled recording of programs and so on accurately and surely can be selected or set properly in an environment where a plurality of pieces of time information can be provided" and means for attaining the object, which "comprises a digital broadcast receiving unit which receives a digital television broadcast, a first time extraction unit which extracts first time information included in the digital television broadcast, a second time extraction unit which extracts second time information through an telecommunication line, an electronic clock whose time can be set, and a control unit which sets a time in the electronic clock and performs various time controls based on the time of the electronic clock, wherein the control unit sets the time of the electronic clock using the first time information when the first time information can be acquired, and the control unit sets the time of the electronic clock using the second time information when the first time information cannot be acquired but the second time information can be acquired".

Patent Document 2 discloses an object "to provide a broadcast receiving device and a clock display method in which a user can set a time of a built-in timer when time information cannot be acquired from the outside", and means for attaining the object, in which "A digital television broadcast receiving device 11 has a function of selectively receiving a digital broadcast with an antenna 43, 48 and a tuner 45, 50, and a function of allowing connection to external equipment through various interfaces, and general control is performed by a control unit 56 while a time is set by a free-running timer unit 71. The timer unit 71 can set a time using time information included in a digital broadcast. In addition, when no digital broadcast can be received, time information acquired from the Internet through a communication I/F 65 can be used or a user can set a time using a remote controller 17 or the like".

Patent Document 1: JP-A-2006-186568
Patent Document 2: JP-A-2006-94358

### DISCLOSURE OF THE INVENTION

### PROBLEMS TO BE SOLVED BY THE INVENTION

In digital broadcasting or transmission of digital content data, video/audio contents are generally compressed by a method of MPEG or the like, and transmitted in a stream or file format. In a receiving device, the contents are expanded by a decoder and reproduced. When the receiving device has a storage function, files of received contents can be stored and reproduced later.

In addition, in fee-based services for providing video/audio contents, it can be considered that the expiration time for allowing reproduction of a content may be set when the content is read and reproduced from the storage function. In this case, it is required to control the reproducibility of the content in accordance with the expiration time.

The aforementioned Patent Document 1 and Patent Document 2 disclose examples of systems in each of which the electronic clock of the broadcast receiving device is set in accordance with time information acquired from a broadcast by the receiving device or in accordance with time information acquired from a communication line by the receiving device.

However, Patent Document 1 says in the paragraph [0076] that "due to the configuration which is made to allow a user to selectively permit or forbid the automatic time setting function, any time of RTC9 set manually by the user can be used by priority so that highly flexible time control can be performed", and Patent Document 2 says in the paragraph [0011] that "even when time information cannot be normally acquired from the outside, a user can set a time in the timer manually so that the clock can be displayed without trouble till the time information can normally acquired from the outside". As in these descriptions, in Patent Document 1 and Patent Document 2, when the automatic time setting function based on the time information from a broadcast or a communication line is forbidden or when the time information cannot be received from the outside, the user can set a time in the electronic clock. In this situation, both the case where the time of the electronic clock is set to be a correct time and the case where the time of the electronic clock is set to be an incorrect time set by the user can be considered. When the user sets the time of the electronic clock to be an incorrect time accidentally or intentionally (for example, when the user sets the date to be the date a week before), there is a fear that a fee-based content such as a video content or an audio content which has been already expired rightfully can be reproduced.

### MEANS FOR SOLVING THE PROBLEM

Accordingly, the present invention provides a receiving device as set forth in claim 1 and a method as set forth in claim 5.

In order to solve the foregoing problems, according to a mode for carrying out the present invention, a user is prohibited from setting a time in an electronic clock which is provided for judging the reproducibility of a content with an expiration time set for use of the content. After a receiving device is started up, the electronic clock is set using time information acquired by a plurality of means, including time information multiplexed on a stream of a digital broadcast, time information acquired from a time server on a communication line, etc. Then, a flag indicating the completion of setting is set. When a content is reproduced, whether the flag indicating the completion of setting has been set or not is checked to judge the reproducibility of the content with the expiration time and to control the reproduction thereof.

According to the aforementioned means, it is possible to make a more proper control of contents. Specifically, for example, even if time information cannot be acquired when a content with an expiration time is reproduced, whether the time of the electronic clock is based on time information received in the past can be determined and used. The room for a user to set the time intentionally can be reduced.

The other objects, features and advantages of the invention will be manifested by the following description of embodiments of the invention in conjunction with the accompanying drawings.

### BEST MODE FOR CARRYING OUT THE INVENTION

Modes for carrying out the invention will be described below.

### Embodiment 1

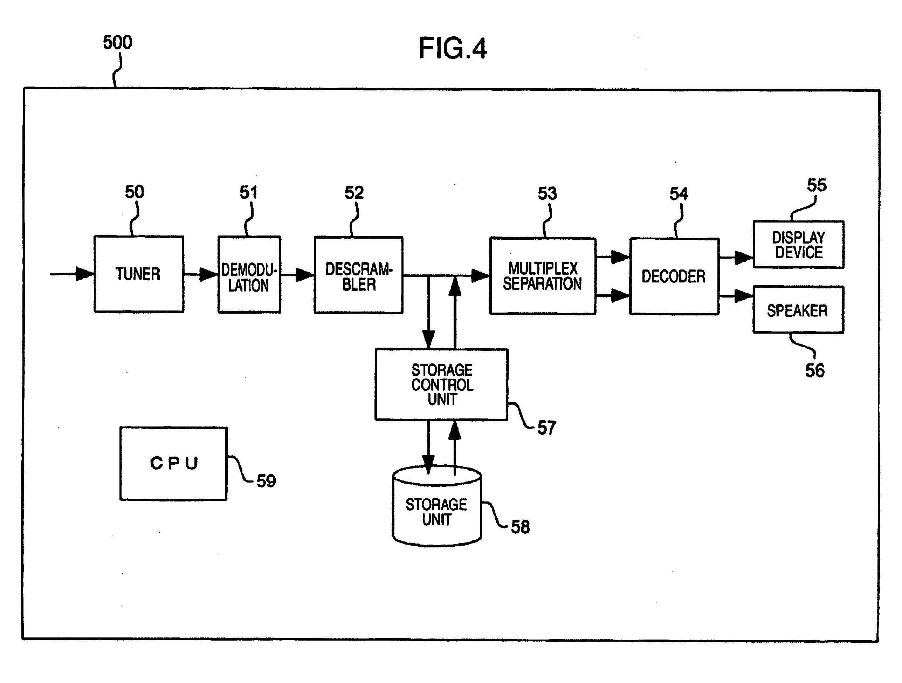

Fig. 4 shows a typical configuration of a receiving device for use in Embodiment 1. Fundamental operation of each constituent will be described.

The reference numeral 500 represents a receiving device. In Fig. 4, the receiving device 500 is depicted to include a display device 55 and a speaker 56. However, the display device 55 and the speaker 56 are not necessarily always included in the receiving device 500, but may be provided outside the receiving device 500.

The reference numeral 50 represents a receiving unit. The receiving unit 50 receives a signal of a broadcast. The receiving unit 50 is, for example, a tuner or the like.

The reference numeral 51 represents a demodulation unit. The demodulation unit 51 demodulates the signal of the broadcast received by the receiving unit 50, so as to form a transport stream.

The reference numeral 52 represents a descrambler unit. The descrambler unit 52 deciphers the transport stream demodulated by the demodulation unit 51.

The reference numeral 53 represents a separation unit. The separation unit 53 separates the transport stream deciphered by the descrambler unit 52, for example, into a video stream and an audio stream.

The reference numeral 54 represents a decoder unit. The decoder unit 54 decodes the video stream and the audio stream separated by the separation unit 53.

The units 51 to 54 are integrated circuits such as LSIs (Large Scale Integrations).

The reference numeral 55 represents a video output unit. The video output unit 55 outputs a picture of the video stream decoded by the decoder unit 54. The video output unit 55 is, for example, a liquid crystal display, a plasma display, an organic EL (electroluminescence) display, a video output terminal to another display device, or the like.

The reference numeral 56 represents an audio output unit. The audio output unit 56 outputs a sound of the audio stream decoded by the decoder unit 54. The audio output unit 56 is, for example, a speaker, a headphone, or the like.

The reference numeral 57 represents a storage control unit. The storage control unit 57 controls storage of received streams. The storage control unit 57 is, for example, an HDD interface circuit or the like.

The reference numeral 58 represents a storage unit. The storage unit 58 stores received streams. The storage unit 58 may be, for example, an optical disk such as a DVD, a hard disk drive (HDD), a flash memory, or the like, or may be a removable one of these.

When a stream stored in the storage unit 58 is reproduced, signals extracted from the storage unit 58 are inputted into the video and audio decoder 54 from the multiplex separation unit 53 via the storage control unit 57, decoded, and outputted as a picture and a sound from the display unit 55 and the speaker 56.

The reference numeral 59 represents a central processing unit (CPU). The CPU 59 controls each of the aforementioned blocks.

The units 50-54, 57 and 59 in the aforementioned configuration may be formed by a circuit or may be formed by a plurality of circuits.

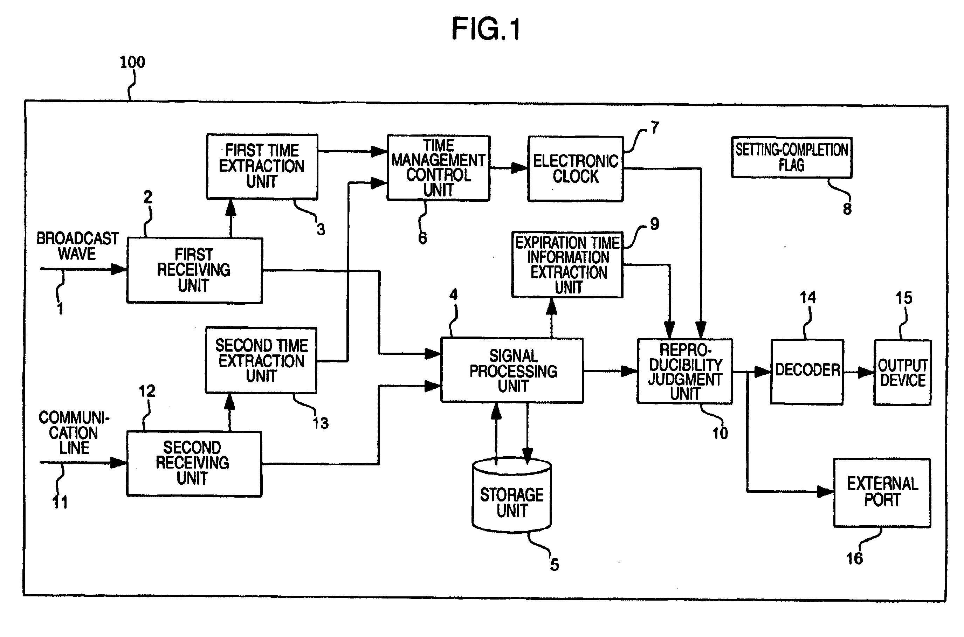

Next, Fig. 1 shows a function block diagram of the receiving device according to Embodiment 1 of the invention.

A receiving device 100 is constituted by a first receiving unit 2 to which a broadcast wave 1 is inputted, a first time extraction unit 3, a second receiving unit 12 to which a communication line 11 is connected, a second time extraction unit 13, a signal processing unit 4, an storage unit 5, a time management control unit 6, an electronic clock 7, a setting-completion flag 8 indicating whether the clock has been set or not, an expiration time information extraction unit 9, a reproducibility judgment unit 10, a decoder 14, an output device 15, and an external port 16.

The broadcast wave 1 is, for example, a broadcast wave of a terrestrial digital broadcast or a broadcast wave of a BS digital broadcast. The communication line 11 is an Internet line, a telephone line, or the like, using an ADSL (Asymmetric Digital Subscriber Line) line, an optical fiber, for example.

The first receiving unit 2 is, for example, implemented by the tuner 50, the demodulation 51 and the descrambler 52 in Fig. 4, and receives a broadcast wave. The second receiving unit 12 is, for example, constituted by a network interface, and receives information from a communication line. The first time extraction unit 3 is, for example, implemented by the multiplex separation 53 in Fig. 4, and extracts time information from the broadcast wave received by the first receiving unit.

The function of the second time extraction unit 13 is, for example, implemented by software, and extracts time information from the information received by the second receiving unit.

The expiration time extraction unit 9 is, for example, implemented by software, and extracts information of an expiration time of a content.

The signal processing unit 4 is, for example, implemented by the storage control unit 57 in Fig. 4, and processes signals from the first receiving unit 2, the second receiving unit 12, the storage unit 5, etc.

The storage unit 5 is, for example, implemented by the storage unit 58 in Fig. 4, and stores information from the signal processing unit 4.

The time management control unit 6 and the reproducibility judgment unit 10 are, for example, implemented by the CPU 59 in Fig. 4. The time management control unit 6 controls the electronic clock 7. The reproducibility judgment unit 10 judges the reproducibility of a content.

The decoder 14 is, for example, implemented by the decoder 54 in Fig. 4, and decodes an encoded content.

The output device 15 is, for example, implemented by the display device 55 and/or the speaker 56 in Fig. 4, and outputs a content decoded by the decoder 14. The output device 15 does not have to be included in the receiving device 100, but may be provided outside the receiving device 100.

The setting-completion flag 8 is, for example, recorded in a separately provided memory, the storage unit 58 or the like.

The electronic clock 7 and the external port 16 are, for example, provided separately in addition to the configuration shown in Fig. 4. The electronic clock 7 measures time. The external port 16 outputs information to the outside.

The operation of the receiving device will be described below with reference to Fig. 1.

When data of a content including a picture or a sound of a digital television broadcast is inputted as the broadcast wave 1 into the first receiving unit 2 constituted by a tuner and a demodulation unit, the data of the content is passed through the signal processing unit 4, decoded by the decoder 14, sent to the output device 15, and reproduced. When the data of the content is recorded, the data of the content is passed through the signal processing unit 4, and stored in the storage unit 5.

On the other hand, when data of a video/audio content is inputted into the second receiving unit from the communication line 11, the data of the content is passed through the signal processing unit 4, decoded by the decoder 14, sent to the output device 15, and reproduced. When the data of the content is recorded, the data of the content is passed through the signal processing unit 4, and stored in the storage unit 5.

Here, consider the case where a content for which an expiration time such as "within 48 hours after purchase" has been set in a fee-based service or the like is acquired from the communication line 11 by downloading, and stored in the storage unit 5. In this case, information indicating the expiration time for use of the content is also stored in the storage unit 5 or an alternative storage function. When a user gives an instruction to reproduce the content, the expiration time information extraction unit 9 reads the information indicating the expiration time from the storage unit 5 through the signal processing unit 4, and sends the read information to the reproducibility judgment unit 10. The reproducibility judgment unit 10 judges the reproducibility of the content from the expiration time information and the current time acquired from the electronic clock 7. When reproduction is permitted because it is within the expiration time, the data of the content read from the storage unit 5 is sent to the decoder 14, outputted to the output device 15 and reproduced. When reproduction is not permitted because it is beyond the expiration time, the content is not reproduced.

In order to carry out the aforementioned operation, it is desired that the electronic clock 7 is correct and incapable of being falsified. The mechanism will be described below.

In a television broadcast receiving device, an internal electronic clock may be not backed up by a battery or the like when the power is off. When the power is turn on to start up the device, there is a fear that the internal clock may show an incorrect time.

Therefore, in order to properly judge whether to use a content with an expiration time set therefore as mentioned previously, the electronic clock 7 is designed to prevent the user from setting a time, while the setting-completion flag 8 indicating whether the electronic clock 7 has been set in accordance with correct time information or not is provided. On starting up, the setting-completion flag 8 is set as "not set".

Description will be made below on processing for setting the time of the electronic clock 7 correctly.

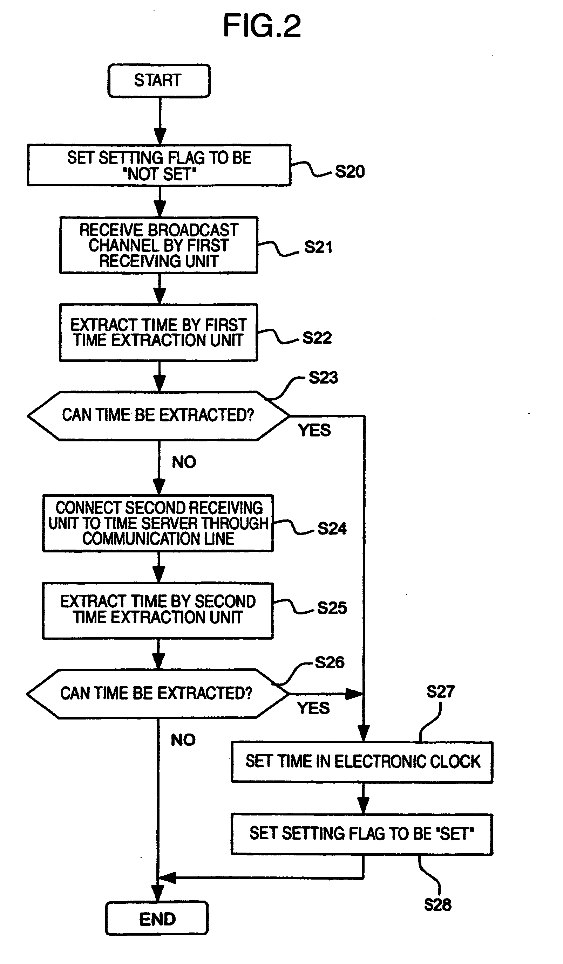

Fig. 2 is a flow chart showing an example of the processing for setting the time of the electronic clock 7 correctly.

The processing may be started, for example, as soon as the receiving device is started up, whenever a predetermined period of time (for example, two hours) has been elapsed or whenever it comes to a predetermined time (for example, 0 a. m.). When the processing is started, the time management control unit 6 sets the setting flag as "not set" (S(Step)20).

Next, the first receiving unit 2 receives a broadcast channel (S21), and the first time extraction unit 3 extracts first time information (S22). The first time information is time information included in a broadcast signal as a packet or the like with time information, for example, called TOT (Time Offset Table).

When the first time information can be extracted (YES in S23), the time management control unit 6 sets a time in the electronic clock based on the first time information (S27), and sets the setting flag as "set" (S28).

When the first time information cannot be extracted in the first time extraction unit (No in S23), then the second receiving unit is connected to a time server (such as an NTP (short for Network Time Protocol, which is a protocol in equipment to be connected to a network, serving to synchronize a clock of the equipment with a correct time) server) via the communication line 11 (S24), and second time information is extracted by the second time extraction unit 13 (S25). The second time information is, for example, information acquired from an NTP server.

Here, when the second time information can be extracted (Yes in S26), the time management control unit 6 sets a time in the electronic clock 7 based on the second time information (S27), and the setting-completion flag 8 is set as "set" (S28). When the time information cannot be extracted by the second time extraction unit 13 (No in S26), acquisition of time is terminated to leave the time as it is, and the setting-completion flag 8 is left "not set".

By the aforementioned processing, the time of the clock provided in the receiving device can be set properly.

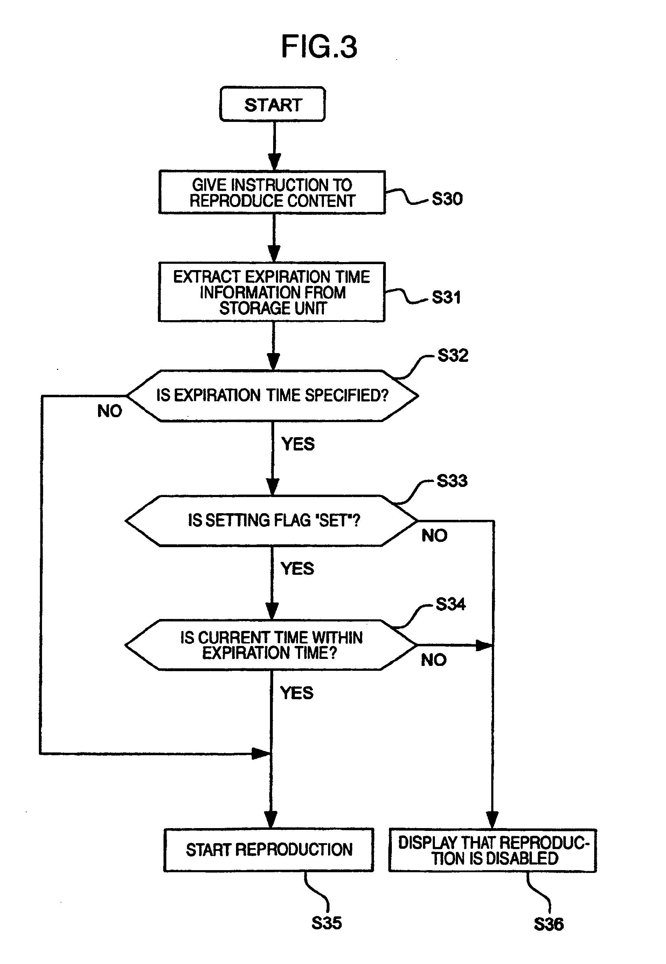

Next, processing for reproducing a content stored in the storage unit 5 will be described. Fig. 3 is a flow chart showing an example of processing for judging the reproducibility of a content stored in the storage unit 5. The processing is started, for example, as soon as the user gives an instruction to reproduce the stored content.

When the user gives an instruction to reproduce a stored content (S30), the expiration time information extraction unit 9 extracts expiration time information of the content from the storage unit (S31), and checks whether an expiration time for the content has been set or not (S32).

When the expiration time is not set (No in S32), reproduction is started (S35).

When the expiration time is set (Yes in S32), the reproducibility judgment unit 10 checks whether the setting flag is "set" or "not set" (S33). When "not set" (No in S33), the reproducibility judgment unit 10 informs the user of that reproduction is disabled (S36).

When "set" (Yes in S33), the reproducibility judgment unit 10 then checks whether the current time of the electronic clock is within the expiration time for use of the content or not (S34). When within the expiration time (Yes in S34), the reproducibility judgment unit 10 sends data to the decoder 14 to start reproduction (S35). When beyond the expiration time (No in S34), the reproducibility judgment unit 10 informs the user of that reproduction is disabled (S36).

When the reproducibility judgment unit 10 informs the user of that reproduction is disabled in S36, the user may be also informed of the reason why reproduction is disabled or a method of enabling reproduction.

For example, when reproduction is disabled because the setting flag is "not set" (No in S33 or in S52 in Embodiment 2), a display to urge the user to improve the condition where the time can be set correctly (such as "Please improve condition to receive broadcast wave" or "Please make connection to communication line") may be outputted.

On the other hand, when, for example, reproduction is disabled because it is expired (No in S34), a display showing that reproduction is disabled because it is expired or a display to urge the user to arrange a procedure for extension of the expiration time or the like (such as "Please get license again") may be outputted.

According to the aforementioned description, whether a content is expired or not can be judged with reference to a correct time, so that it is possible to prevent the time from being falsified to reproduce an expired content.

### Embodiment 2

Next, description will be made on an embodiment in which processing for setting a time as shown in S21 to S28 of Fig. 2 is attempted again when the setting-completion flag is "not set" in S33 of Fig. 3 (No in S33).

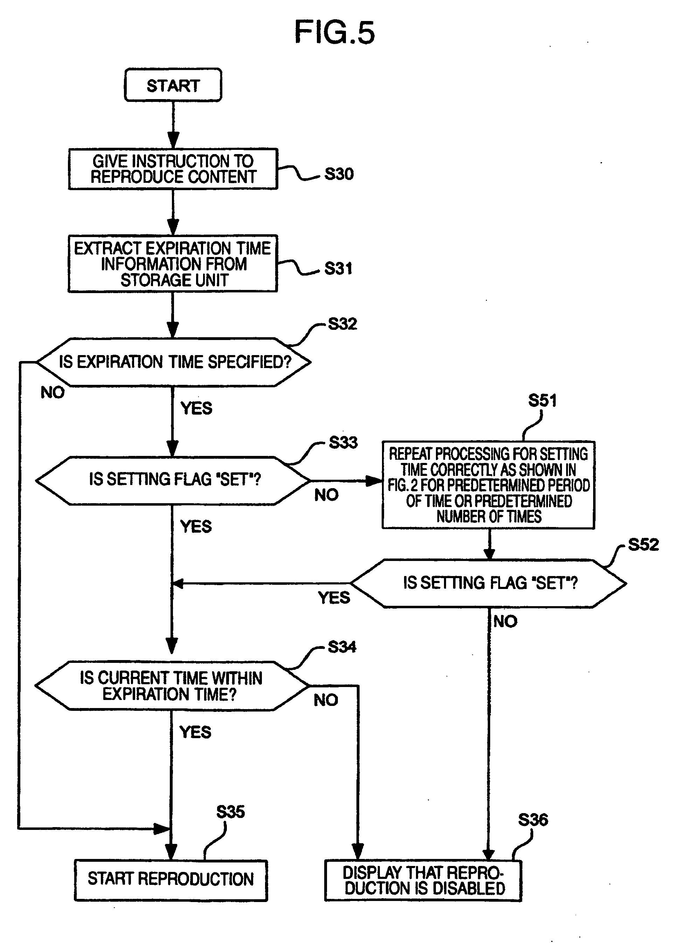

Fig. 5 is a flow chart showing an example of processing for judging the reproducibility of a content stored in the storage unit 5 according to Embodiment 2. Steps S30-36 are similar to those in Fig. 3. Here, description will be made on steps S51-52 which are different from the processing of Fig. 3.

When the setting-completion flag is "not set" in S33 (No in S33), the time management control unit 6 attempts the processing for setting a time as shown in S21-28 for a predetermined time or a predetermined number of times. Then the procedure goes to S52.

When the time can be set correctly as a result and the setting-completion flag 8 is "set" (Yes in S52), the procedure goes to S34.

When the time cannot be set correctly even in S51 and the setting flag 8 is "not set" (No in S52), the procedure goes to S36.

According to Embodiment 2, even when the time has not been set before reproduction of a content with an expiration time (even when the setting-completion flag 8 is "not set"), the content can be reproduced if the condition allows the time to be set correctly at the time of reproducing the content.

The aforementioned Embodiments 1 and 2 show the case where time information is acquired from a broadcast wave or a communication line. However, even in the configuration where time information is acquired from a plurality of broadcast waves or in the configuration where time information is acquired from a plurality of communication lines, similar effect to that of the aforementioned embodiments can be obtained.

In addition, the aforementioned embodiments are designed to attempt to acquire time information from a broadcast wave first, and to acquire time information from a communication line when time information cannot be acquired from the broadcast wave. However, it is also possible to obtain similar effect to that of the aforementioned embodiments in the configuration where acquisition of time information from a communication line is attempted first and time information from a broadcast wave is then acquired when time information cannot be acquired from the communication line. Alternatively, configuration may be made so that time information is acquired only from a broadcast wave or only from a communication line.

Further, even if a means is provided for acquiring time information from another (for example, a standard wave (which is a wave broadcast by a government or an international organization as a national standard or an international standard of a time and a frequency) or the like) than the broadcast wave and the communication line, similar effect to that of the aforementioned embodiments can be obtained.

Further, the aforementioned embodiments have been described in the case where one setting-completion flag is provided. However, two setting-completion flags may be provided, one of which concerns time information acquired from the broadcast wave and the other of which concerns time information acquired from the communication line. Configuration may be made so that the procedure goes to S34 when at least one of the setting-completion flags is "set" in S33 in Fig. 3, while the procedure goes to S36 when both the setting-completion flags are "not set". In addition, when the setting-completion flag is "not set" in S33 in Fig. 3 (No in S33), the processing for setting the time correctly as shown in Fig. 2 may be carried out for a predetermined period of time or a predetermined number of times before the fact that reproduction is disabled is displayed.

In addition to the electronic clock 7 whose time cannot be set by the user, another clock whose time can be set by the user may be provided. For example, for the user who wants to set his/her home clock forward by five minutes, it is inconvenient that the user cannot set the time at all.

In such a case, another clock by which the user tells time is provided separately so that the time of the clock by which the user tells time can be set by the user. Configuration may be made so that the reproducibility of a content with an expiration time is judged based on the time of the electronic clock 7 whose time cannot be set by the user.

Further, configuration may be made to allow the user to set the time of the electronic clock 7. In this case, the setting-completion flag 8 is designed to be "not set" when the user sets the time of the electronic clock 7. Due to this configuration, the user can set the time of the electronic clock 7 while the time can be prevented from being falsified to reproduce an expired content.

The embodiments have been described above. However, the present invention is not limited thereto, but it is obvious to those skilled in the art that various changes and modifications can be made within the scope of the appending claims.

### BRIEF DESCRIPTION OF THE DRAWINGS

[Fig. 1] A diagram showing a configuration example of function blocks of a receiving device.
[Fig. 2] A flow chart showing an example of processing for setting a time in an electronic clock of the receiving device.
[Fig. 3] A flow chart showing an example of processing for judging an expiration time for use of a content stored in a storage unit.
[Fig. 4] A diagram showing an example of a hardware configuration of the receiving device.
[Fig. 5] A flow chart showing an example of processing for judging an expiration time for use of a content stored in the storage unit.

## Claims

1. A receiving device (100, 500) being connected to a time server via a network and having an internal clock (7), comprising:
a first receiving unit (2) being adapted to receive digital broadcast signals;
a first time extraction unit (3) being adapted to extract time information from the digital broadcast signals received;
a second receiving unit (12) being adapted to receive information from the time server;
a second time extraction unit (13) being adapted to extract time information from the information received from the time server;
a time management control unit (6) being adapted to set the time of the internal clock based on the time information extracted by the first time extraction unit (3) and the time information extracted by the second time extraction unit (13); and
a recording unit (8) being adapted to record setting-completion information indicating whether the time management control unit has set the internal clock or not;
an expiration time information extraction unit (9) being adapted to extract expiration time information from information recorded in a recording medium (5), the expiration time information indicating an expiration time for use of the recorded information; and
an output propriety judgment unit being adapted to, only when it is checked that the setting-completion information recorded in the recording unit indicates that the clock has been set, compare the expiration time information extracted by the expiration time information extraction unit with the internal time of the device set by the internal clock and judge whether to output the information recorded in the recording medium or not.

2. The receiving device according to Claim 1, wherein:
when it is checked that the setting-completion information indicates that the clock has been set, the output propriety judgment unit is adapted to judge the information recorded in the recording medium to be outputted if the internal time of the device is within the expiration time indicated by the expiration time information, and judge the information recorded in the recording medium not to be outputted if the internal time of the device is beyond the expiration time indicated by the expiration time information.

3. The receiving device according to Claim 1, wherein:
the output propriety judgment unit is adapted to judge the information recorded in the recording medium not to be outputted when the setting-completion information cannot be checked.

4. The receiving device according to any of Claims 1 to 3, wherein:
the time management control unit is adapted to set the time of the internal clock based on the second time information received by the second receiving unit when the first time information is unable to be received by the first receiving unit.

5. A method for judging, based on the time of an internal clock of a receiving device, whether information stored in a recording medium (5) of the receiving device to be outputted or not, comprising the steps of:
receiving a digital broadcast signal (S21);
receiving time information from a time server (S24);
extracting a first time information from the digital broadcast signal received (S22);
extracting a second time information from the time information received from the time server (S25);
setting the time of the internal clock based on the first time information or the second time information (S27);
recording setting-completion information indicating whether the internal clock has been set or not (S28);
extracting expiration time information from information recorded in the recording medium (5), the expiration time information indicating an expiration time for use of the recorded information (S31); and
judging whether the information stored in the recording medium (5) to be outputted or not based on the internal time of the device set by the internal clock, the expiration time information extracted, and the setting-completion information (S34).

6. The method according to Claim 5, if the setting-completion information indicates that the internal clock has not been set, disabling output of the information stored in the recording medium (5) regardless of what the expiration time information indicates, and if the setting-completion information indicates that the internal clock has been set, comparing the expiration time information extracted with the internal time of the device set and enabling
the output of the information stored in the recording medium (5) when the internal time of the device set by the internal clock does not expire the expiration time for use of the recorded information indicated by the expiration time information, and disabling the output of the information stored in the recording medium (5) when the internal time of the device set by the internal clock expires the expiration time for use of the recorded information indicated by the expiration time information.

## Patentansprüche

1. Empfangsvorrichtung (100, 500), die über ein Netzwerk mit einem Zeitserver verbunden ist und eine interne Uhr (7) aufweist, umfassend:
eine erste Empfangseinheit (2), die dazu ausgelegt ist, digitale Sendesignale zu empfangen;
eine erste Zeitentnahmeeinheit (3), die dazu ausgelegt ist, Zeitinformationen aus den empfangenen digitalen Sendesignalen zu entnehmen;
eine zweite Empfangseinheit (12), die dazu ausgelegt ist, Informationen von dem Zeitserver zu empfangen;
eine zweite Zeitentnahmeeinheit (13), die dazu ausgelegt ist, Zeitinformationen aus den von dem Zeitserver empfangenen Informationen zu entnehmen;
eine Zeitverwaltungssteuereinheit (6), die dazu ausgelegt ist, die Zeit der internen Uhr anhand der durch die erste Zeitentnahmeeinheit (3) entnommenen Zeitinformationen und der durch die zweite Zeitentnahmeeinheit (13) entnommenen Zeitinformationen einzustellen; und
eine Aufzeichnungseinheit (8), die dazu ausgelegt ist, Einstellungs-Vollendungsinformationen aufzuzeichnen, die angeben, ob die Zeitverwaltungssteuereinheit die interne Uhr eingestellt hat oder nicht;
eine Verfallszeitinformations-Entnahmeeinheit (9), die dazu ausgelegt ist, Verfallszeitinformationen aus den in einem Aufzeichnungsmedium (5) aufgezeichneten Informationen zu entnehmen, wobei die Verfallszeitinformationen eine Verfallszeit zur Verwendung der aufgezeichneten Informationen angeben; und
eine Ausgabekorrektheit-Beurteilungseinheit, die dazu ausgelegt ist, nur dann, wenn überprüft worden ist, dass die in der Aufzeichnungseinheit aufgezeichneten Einstellungsvollendungs-Informationen angeben, dass die Uhr eingestellt worden ist, die durch die Verfallszeitinformations-Entnahmeeinheit entnommenen Verfallszeitinformationen mit der internen Zeit der Vorrichtung, die durch die interne Uhr eingestellt ist, zu vergleichen und darüber zu urteilen, ob die in dem Aufzeichnungsmedium aufgezeichneten Informationen ausgegeben werden sollen oder nicht.

2. Empfangsvorrichtung nach Anspruch 1, wobei:
wenn überprüft worden ist, dass die Einstellungsvollendungs-Informationen angeben, dass die Uhr eingestellt worden ist, die Ausgabekorrektheit-Beurteilungseinheit dazu ausgelegt ist, über die auszugebenden in dem Aufzeichnungsmedium aufgezeichneten Informationen zu urteilen, falls die interne Zeit der Vorrichtung innerhalb der durch die Verfallszeitinformationen angegebenen Verfallszeit ist, und über die nicht auszugebenden in dem Aufzeichnungsmedium aufgezeichneten Informationen zu urteilen, falls die interne Zeit der Vorrichtung außerhalb der durch die Verfallszeitinformationen angegebenen Verfallszeit ist.

3. Empfangsvorrichtung nach Anspruch 1, wobei:
die Ausgabekorrektheit-Beurteilungseinheit dazu ausgelegt ist, über die in dem Aufzeichnungsmedium aufgezeichneten nicht auszugebenden Informationen zu urteilen, wenn die Einstellungsvollendungs-Informationen nicht überprüft werden können.

4. Empfangsvorrichtung nach einem der Ansprüche 1 bis 3, wobei:
die Zeitverwaltungssteuereinheit dazu ausgelegt ist, die Zeit der internen Uhr anhand der durch die zweite Empfangseinheit empfangenen zweiten Informationen einzustellen, wenn die ersten Zeitinformationen nicht von der ersten Empfangseinheit empfangen werden können.

5. Verfahren zum Beurteilen, anhand der Zeit einer internen Uhr einer Empfangsvorrichtung, ob in einem Aufzeichnungsmedium (5) der Empfangsvorrichtung gespeicherte Informationen ausgegeben werden oder nicht, umfassend die Schritte:
Empfangen eines digitalen Sendesignals (S21);
Empfangen von Zeitinformationen von einem Zeitserver (S24);
Entnehmen von ersten Zeitinformationen aus dem empfangenen digitalen Sendesignal (S22);
Entnehmen von zweiten Zeitinformationen aus den von dem Zeitserver empfangenen Zeitinformationen (S25);
Einstellen der Zeit der internen Uhr anhand der ersten Zeitinformationen oder der zweiten Zeitinformationen (S27);
Aufzeichnen von Einstellungsvollendungs-Informationen, die angeben, ob die interne Uhr eingestellt worden ist oder nicht (S28);
Entnehmen von Verfallszeitinformationen aus in dem Aufzeichnungsmedium (5) aufgezeichneten Informationen, wobei die Verfallszeitinformationen eine Verfallszeit zur Verwendung der aufgezeichneten Informationen angeben (S31); und
Beurteilen, ob die in dem Aufzeichnungsmedium (5) gespeicherten Informationen ausgegeben werden oder nicht, anhand der internen Zeit der Vorrichtung, die durch die interne Uhr eingestellt ist, der entnommenen Verfallszeitinformationen und der Einstellungsvollendungs-Informationen (S34).

6. Verfahren nach Anspruch 5, ferner umfassend, falls die Einstellungsvollendungs-Informationen anzeigen, dass die interne Uhr nicht eingestellt worden ist, Deaktivieren einer Ausgabe der in dem Aufzeichnungsmedium gespeicherten Informationen unabhängig davon, was die Verfallszeitinformationen anzeigen, und, falls die Einstellungsvollendungs-Informationen anzeigen, dass die interne Uhr eingestellt worden ist, Vergleichen der entnommenen Verfallszeitinformationen mit der eingestellten internen Zeit der Vorrichtung, und Freigeben der Ausgabe der in dem Aufzeichnungsmedium (5) gespeicherten Informationen, wenn die interne Zeit der Vorrichtung, die durch die interne Uhr eingestellt ist, noch nicht die Verfallszeit zur Verwendung der aufgezeichneten Informationen, die durch die Verfallszeitinformationen angegeben sind, überschreitet, und Deaktivieren der Ausgabe der in dem Aufzeichnungsmedium (5) gespeicherten Informationen, wenn die interne Zeit der Vorrichtung, die durch die interne Uhr eingestellt ist, die Verfallszeit zur Verwendung der aufgezeichneten Informationen, die durch die Verfallszeitinformationen dargestellt ist, überschreiten.

## Revendications

1. Dispositif de réception (100, 500) étant relié à un serveur d'horloge via un réseau et ayant une horloge interne (7), comportant :
une première unité de réception (2) étant adaptée pour recevoir des signaux numériques de radiodiffusion,
une première unité d'extraction temporelle (3) étant adaptée pour extraire des informations temporelles des signaux numériques de radiodiffusion reçus,
une seconde unité de réception (12) étant adaptée pour recevoir des informations en provenance du serveur d'horloge,
une seconde unité d'extraction temporelle (13) étant adaptée pour extraire des informations temporelles des informations reçues en provenance du serveur d'horloge,
une unité de commande de gestion temporelle (6) étant adaptée pour régler l'heure de l'horloge interne sur la base des informations temporelles extraites par la première unité d'extraction temporelle (3) et des informations temporelles extraites par la seconde unité d'extraction temporelle (13), et
une unité d'enregistrement (8) étant adaptée pour enregistrer des informations de fin de réglage indiquant si oui ou non l'unité de commande de gestion temporelle a réglé l'horloge interne,
une unité d'extraction d'informations d'heure d'expiration (9) étant adaptée pour extraire des informations d'heure d'expiration des informations enregistrées dans un support d'enregistrement (5), les informations d'heure d'expiration indiquant une heure d'expiration pour l'utilisation des informations enregistrées, et
une unité de détermination de propriété de sortie étant adaptée pour, uniquement lorsqu'il est vérifié que les informations de fin de réglage enregistrées dans l'unité d'enregistrement indiquent que l'horloge a été réglée, comparer les informations d'heure d'expiration extraites par l'unité d'extraction d'informations d'heure d'expiration à l'heure interne du dispositif réglée par l'horloge interne et déterminer si oui ou non il faut délivrer en sortie les informations enregistrées dans le support d'enregistrement.

2. Dispositif de réception selon la revendication 1, dans lequel :
lorsqu'il est vérifié que les informations de fin de réglage indiquent que l'horloge a été réglée, l'unité de détermination de propriété de sortie est adaptée pour déterminer les informations enregistrées dans le support d'enregistrement à délivrer en sortie si l'heure interne du dispositif est comprise dans l'heure d'expiration indiquée par les informations d'heure d'expiration, et déterminer les informations enregistrées dans le support d'enregistrement comme n'étant pas à délivrer en sortie si l'heure interne du dispositif dépasse l'heure d'expiration indiquée par les informations d'heure d'expiration.

3. Dispositif de réception selon la revendication 1, dans lequel :
l'unité de détermination de propriété de sortie est adaptée pour déterminer les informations enregistrées dans le support d'enregistrement comme n'étant pas à délivrer en sortie lorsque les informations de fin de réglage ne peuvent pas être vérifiées.

4. Dispositif de réception selon l'une quelconque des revendications 1 à 3, dans lequel :
l'unité de commande de gestion temporelle est adaptée pour régler l'heure de l'horloge interne sur la base des secondes informations temporelles reçues par la seconde unité de réception lorsque les premières informations temporelles ne sont pas en mesure d'être reçues par la première unité de réception.

5. Procédé pour déterminer, sur la base de l'heure d'une horloge interne d'un dispositif de réception, si oui ou non des informations mémorisées dans un support d'enregistrement (5) du dispositif de réception doivent être délivrées en sortie, comportant les étapes consistant à :
recevoir un signal numérique de radiodiffusion (S21),
recevoir des informations temporelles en provenance d'un serveur d'horloge (S24),
extraire une première information temporelle du signal numérique de radiodiffusion reçu (S22),
extraire une seconde information temporelle des informations temporelles reçues en provenance du serveur d'horloge (S25),
régler l'heure de l'horloge interne sur la base de la première information temporelle ou de la seconde information temporelle (S27),
enregistrer des informations de fin de réglage indiquant si oui ou non l'horloge interne a été réglée (S28),
extraire des informations d'heure d'expiration des informations enregistrées dans le support d'enregistrement (5), les informations d'heure d'expiration indiquant une heure d'expiration pour utiliser les informations enregistrées (S31), et
déterminer si oui ou non les informations mémorisées dans le support d'enregistrement (5) doivent être délivrées en sortie sur la base de l'heure interne du dispositif réglée par l'horloge interne, des informations d'heure d'expiration extraites, et des informations de fin de réglage (S34).

6. Procédé selon la revendication 5 pour, si les informations de fin de réglage indiquent que l'horloge interne n'a pas été réglée, empêcher la sortie des informations mémorisées dans le support d'enregistrement (5) indépendamment de ce qui est indiqué par les informations d'heure d'expiration, et si les informations de fin de réglage indiquent que l'horloge interne a été réglée, comparer les informations d'heure d'expiration extraites à l'heure interne du dispositif réglée et permettre la sortie des informations mémorisées dans le support d'enregistrement (5) lorsque l'heure interne du dispositif réglée par l'horloge interne n'atteint pas l'heure d'expiration pour l'utilisation des informations enregistrées indiquée par les informations d'heure d'expiration, et empêcher la sortie des informations mémorisées dans le support d'enregistrement (5) lorsque l'heure interne du dispositif réglée par l'horloge interne atteint l'heure d'expiration pour l'utilisation des informations enregistrées indiquée par les informations d'heure d'expiration.
